(19)

Europäisches
Patentamt
European
Patent Office
Office européen
des brevets

(11) **EP 3 868 571 A1**

(12) **EUROPEAN PATENT APPLICATION**
published in accordance with Art. 153(4) EPC

(43) Date of publication:
25.08.2021 Bulletin 2021/34

(51) Int Cl.:
*B60C 9/00* (2006.01)        *B60C 9/18* (2006.01)
*B60C 9/20* (2006.01)

(21) Application number: 19873738.9

(22) Date of filing: 16.10.2019

(86) International application number:
PCT/JP2019/040764

(87) International publication number:
WO 2020/080443 (23.04.2020 Gazette 2020/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.10.2018 JP 2018196210

(71) Applicant: BRIDGESTONE CORPORATION
Chuo-ku
Tokyo 104-8340 (JP)

(72) Inventor: UEMURA, Kazuki
Tokyo 104-8340 (JP)

(74) Representative: Oxley, Robin John George
Marks & Clerk LLP
15 Fetter Lane
London EC4A 1BW (GB)

(54) **TIRE**

(57)    The present invention provides a tire that uses
an elastomer-metal cord composite, which composite is
obtained by coating metal cords with an elastomer, each
metal cord being composed of a bundle of metal filaments
arranged without being twisted, and which composite is
capable of highly improving the performance of the tire.
The above-described tire is a tire (100) including a belt
(105) which includes at least two belt layers (105a) and
(105b). In this tire, the belt layers (105a) and (105b) are
each obtained by coating metal cords (2) with an elastomer (3), each metal cord (2) being composed of a bundle of a plurality of metal filaments (1) arranged in a row
without being twisted; the metal filaments (1) are shaped,
and at least one pair of adjacent metal filaments (1) in
the metal filaments (1) have different phases from each
other; each of the belt layers (105a) and (105b) has a
thickness of more than 0.30 mm and less than 1.00 mm;
and the distance in the tire radial direction between the
metal cords (2) in the two adjacent belt layers (105a) and
(105b) is 0.10 mm or more and 1.20 mm or less, at the
center of the tire.

FIG. 2

EP 3 868 571 A1

**Description**

TECHNICAL FIELD

The present invention relates to a tire, and more particularly relates to a tire in which an elastomer-metal cord composite is used for a belt, which composite is obtained by coating metal cords with an elastomer, each metal cord being composed of a bundle of metal filaments arranged without being twisted.

BACKGROUND ART

A tire, for which strength is required, generally includes, in the interior thereof: a carcass embedded along the meridian direction of a ring-like tire body, and including a reinforcing cord; and a belt layer disposed on the outer side in the tire radial direction of the carcass. Such a belt layer is usually formed using an elastomer-metal cord composite obtained by coating metal cords, such as steel cords, with an elastomer, so as to impart load bearing capacity, traction resistance, and the like to the tire.

In recent years, there are increasing demands for reducing the weight of tires, in order to improve the fuel efficiency of automobiles. As means for reducing the weight of tires, metal cords for belt reinforcement are drawing attention, and a number of techniques are disclosed, in which metal filaments are used as belt cords, without being twisted. For example, Patent Document 1 proposes a tire in which metal filaments having a small diameter are arranged in parallel at a high tensile strength, without being twisted, to form metal filament bundles, and at least two belt plies, in each of which the thus formed filament bundles are arranged in the width direction in a coating rubber, are used to form belt layers, in an attempt to improve lightness and durability. In this tire, the number of metal filaments in each metal filament bundle is optimized depending on the diameter of the metal filaments. Further, it is also proposed therein that the thickness of each metal filament bundle in the radial direction with respect to the thickness of each belt ply is adjusted to a specific ratio.

RELATED ART DOCUMENT

PATENT DOCUMENT

Patent Document 1: JP 2001-334810 A

SUMMARY OF THE INVENTION

PROBLEMS TO BE SOLVED BY THE INVENTION

However, although Patent Document 1 examines the lightness and durability of the tire, examinations on other performances have not been done. Therefore, with increasingly higher performances of tires in the future, it is expected that a further improvement is needed, in the case of using metal filaments as belt cords without twisting.

Accordingly, an object of the present invention is to provide a tire in which an elastomer-metal cord composite is used for a belt, which composite is obtained by coating metal cords with an elastomer, each metal cord being composed of a bundle of metal filaments arranged without being twisted, and which composite is capable of highly improving the performance of the tire.

MEANS FOR SOLVING THE PROBLEMS

As a result of intensive studies to solve the above-mentioned problems, the present inventors have obtained the following findings. That is, when metal cords in which metal filaments are bundled without being twisted are used, the metal cords reduce the in-plane deformation upon compression input to a belt treat, leading to a worsened fatigue of the metal cords. Further, in the metal cords in which metal filaments are bundled without being twisted, rubber is difficult to infiltrate into gaps between adjacent metal filaments, and thus causes the occurrence of non-rubber-coated regions, which are not coated by the rubber. Accordingly, the positions of the metal filaments may be shifted relative to one another, when the tire rolls, to cause a decrease in in-plane rigidity (rigidity within the tire tread), possibly resulting in impaired steering stability. Based on such findings, the present inventors have found out, as a result of further intensive studies, that it is possible to solve the above-mentioned problems by configuring bundles of metal filaments as follows, thereby completing the present invention.

Specifically, the tire according to the present invention is a tire including:

a carcass as a skeleton extending toroidally between a pair of bead portions; and
a belt disposed on the outer side in the tire radial direction of a crown portion of the carcass and including at least two belt layers;
characterized in that:

the belt layers are each composed of an elastomer-metal cord composite obtained by coating metal cords with an elastomer, each metal cord being composed of a bundle of a plurality of metal filaments arranged in a row without being twisted;
the metal filaments are shaped, and at least one pair of adjacent metal filaments in the metal filaments have different phases from each other;
each of the belt layers has a thickness of more than 0.30 mm and less than 1.00 mm; and
the distance in the tire radial direction between the metal cords in two adjacent layers of the belt layers is 0.10 mm or more and 1.20 mm or less, at the center of the tire.

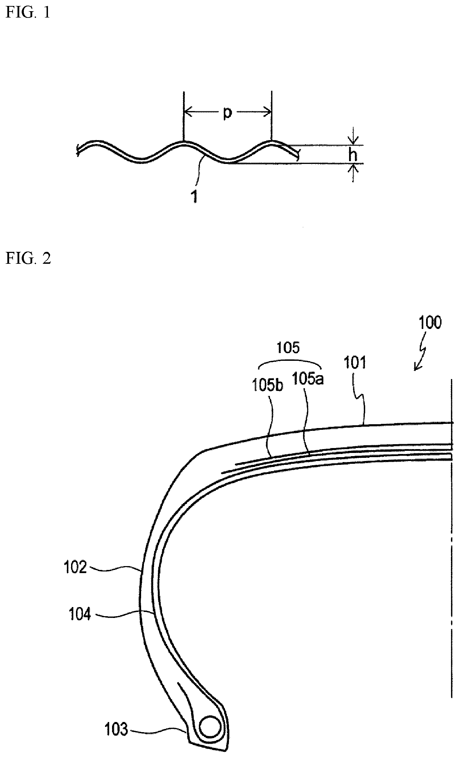

FIG. 1 is an explanatory diagram of a metal filament illustrating definitions of an amount of shaping h and a shaping pitch p of the metal filament. The amount of shaping h as used herein refers to the width of variation of the metal filament 1 which does not include the wire diameter of the filament. The amount of shaping h of the metal filament 1 is determined by projecting an image of the metal filament 1 after being shaped, by a projector, and measuring the image of the metal filament projected on a screen or the like.

In the tire according to the present invention, preferably the metal filaments have the same amount of shaping and the same pitch. Further, in the tire according to the present invention, the phase difference between the adjacent metal filaments is preferably from $\pi/4$ to $7\pi/4$. Still further, in the tire according to the present invention, the elastomer coverage of the adjacent metal filaments on the side surfaces in the width direction of the metal cord is preferably 10% or more per unit length. Yet still further, in the tire according to the present invention, each of the metal filaments preferably has an amount of shaping from 0.03 to 0.30 mm and a shaping pitch of from 2 to 30 mm. Yet still further, in the tire according to the present invention, the shaping direction of the shaped metal filaments is preferably the width direction of the metal cord. Yet still further, in the tire according to the present invention, an interlayer rubber is preferably provided between the belt layers that are adjacent to each other, at each end thereof in the tire width direction, and in this case, the interlayer rubber preferably has a thickness of 0.2 mm or more and 1.2 mm or less. Yet still further, in the tire according to the present invention, the elastomer preferably has a 50% modulus value, as measured in accordance with JIS K6251 (2010), of 1.5 MPa or more. Yet still further, in the tire according to the present invention, each of the metal filaments preferably has a tensile strength of 2,500 MPa or more. In the elastomer-metal cord composite of the present invention, a straight metal filament refers to a metal filament that has not been intentionally subjected to shaping and is substantially not shaped.

The elastomer coverage as used herein refers to a value determined as follows. For example, in cases where rubber is used as the elastomer, and steel cords are used as the metal cords, the steel cords are coated with the rubber, subjected to vulcanization, and then each steel cord is pulled out from the resulting rubber-steel cord composite. Thereafter, the lengths of the regions of the steel filaments, on the side surfaces in the width direction of the metal cord, which have been coated by the rubber infiltrated into gaps between the steel filaments constituting the steel cord, are measured, and the average of the values calculated based on the following calculation formula, is determined as the elastomer coverage.

$$\text{Elastomer coverage} = (\text{rubber coated length} / \text{sample length}) \times 100 \ (\%).$$

The elastomer coverage can be calculated in the same manner, in cases where an elastomer other than rubber is used as the elastomer, and also in cases where metal cords other than steel cords are used as the metal cords.

EFFECTS OF THE INVENTION

According to the present invention, it is possible to provide a tire in which an elastomer-metal cord composite is used for a belt, which composite is obtained by coating metal cords with an elastomer, each metal cord being composed of a bundle of metal filaments arranged without being twisted, and which composite is capable of highly improving the performance of the tire.

BRIEF DESCRIPTION OF THE DRAWINGS

FIG. 1 is an explanatory diagram of a metal filament illustrating definitions of an amount of shaping h and a shaping pitch p of the metal filament.

FIG. 2 is a schematic half cross-sectional view of a tire according to one suitable embodiment of the present invention.

FIG. 3 is a partial cross-sectional view in the width direction of an elastomer-metal cord composite used for a belt layer of the tire according to one suitable embodiment of the present invention.

FIG. 4 is a schematic plan view of a metal cord in the elastomer-metal cord composite used for the belt layer of the tire according to one suitable embodiment of the present invention.

FIG. 5 is a schematic cross-sectional view in the width direction of the metal cord in the elastomer-metal cord composite used for the belt layer of the tire according to one suitable embodiment of the present invention.

FIG. 6 is another example of a schematic cross-sectional view in the width direction of the metal cord in the elastomer-metal cord composite used for the belt layer of the tire according to one suitable embodiment of the present invention.

FIG. 7 is a schematic cross-sectional view in the width direction of a metal cord in an elastomer-metal cord composite used for a belt layer of a tire according to another suitable embodiment of the present invention.

FIG. 8 is a schematic half cross-sectional view of a belt in the tire according to one suitable embodiment of the present invention.

MODE FOR CARRYING OUT THE INVENTION

The tire according to the present invention will now be described in detail.

FIG. 2 shows a schematic half cross-sectional view of a tire according to one suitable embodiment of the present invention. A tire 100 shown in FIG. 2 includes: a tread portion 101 which forms a grounding surface; a pair of side wall portions 102 extending inward in the tire radial direction, continuously from both sides of the tread portion 101; and bead portions 103 each provided continuously at the inner peripheral side of each side wall portion 102.

In the tire 100 shown in FIG. 2, the tread portion 101, the side wall portions 102 and the bead portions 103 are reinforced by a carcass 104 composed of one piece of a carcass layer extending toroidally from one bead portion 103 to the other bead portion 103. Further, the tread portion 101 is reinforced by a belt 105 which is disposed on the outer side in the tire radial direction of the crown region of the carcass 104, and which includes at least two layers, which are a first belt layer 105a and a second belt layer 105b in the example shown in FIG. 2. The carcass 104 may include a plurality of carcass layers, and organic fiber cords extending in a direction substantially orthogonal to the tire circumferential direction, for example, extending at an angle of from 70 to 90°, can be suitably used.

In the tire 100 according to the present invention, the at least two belt layers are each composed of an elastomer-metal cord composite obtained by coating metal cords with an elastomer, each metal cord being composed of a bundle of a plurality of metal filaments arranged in a row without being twisted. In the tire 100 according to the present invention, the metal filaments in the elastomer-metal cord composite are shaped, and at least one pair of adjacent metal filaments in the metal filaments have different phases from each other. These shaped metal filaments are preferably arranged such that the filaments do not overlap with one another in the thickness direction of the metal cord. Further, each of the belt layers has a thickness of more than 0.30 mm and less than 1.00 mm; and the distance in the tire radial direction between the metal cords in two adjacent layers of the belt layers is 0.10 mm or more and 1.20 mm or less, at the center of the tire. By employing such a structure, the thickness of the belt 105 can be reduced, enabling to achieve a reduction in the weight of the tire. Further, the in-plane rigidity of the belt is improved, as a result of which the steering stability of the tire can be favorably ensured. In other words, the durability of the belt and the steering stability can be improved simultaneously. The elastomer-metal cord composite according to the tire 100 of the present invention will now be described in detail.

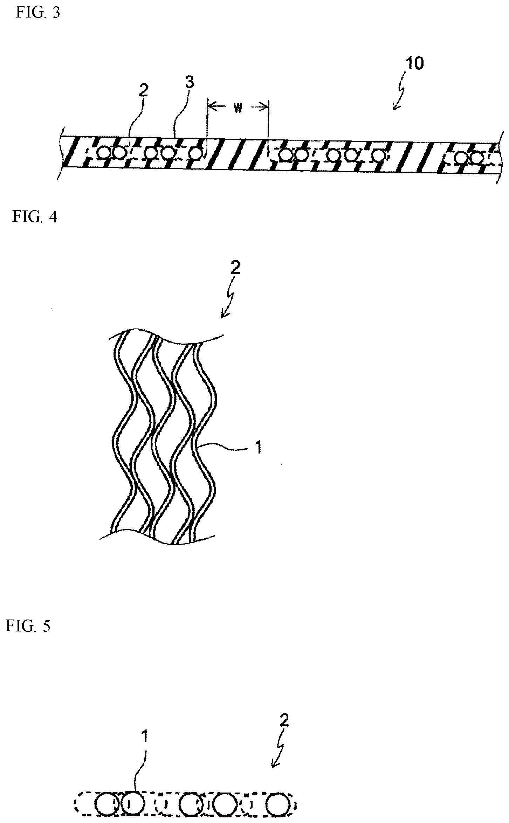

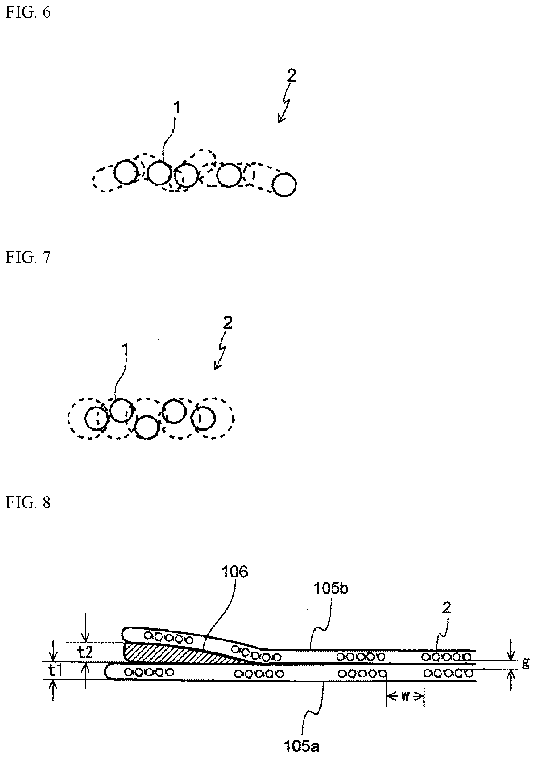

FIG. 3 is a partial cross-sectional view in the width direction of an elastomer-metal cord composite used for a belt layer of the tire according to one suitable embodiment of the present invention; FIG. 4 is a schematic plan view of a metal cord in the elastomer-metal cord composite used for the belt layer of the tire according to one suitable embodiment of the present invention; FIG. 5 is a schematic cross-sectional view in the width direction of the metal cord in the elastomer-metal cord composite used for the belt layer of the tire according to one suitable embodiment of the present invention; and FIG. 6 is another example of a schematic cross-sectional view in the width direction of the metal cord in the elastomer-metal cord composite used for the belt layer of the tire according to one suitable embodiment of the present invention.

An elastomer-metal cord composite 10 according to the tire 100 of the present invention is one obtained by coating metal cords 2 with an elastomer 3, each metal cord 2 being composed of a bundle of a plurality of metal filaments 1 arranged in a row without being twisted. Each metal cord 2 is composed of a bundle of suitably two or more pieces, more suitably 5 or more pieces, and at the same time, suitably 20 or less pieces, more suitably 12 or less pieces, still more suitably 10 or less pieces, and particularly suitably 9 or less pieces, of the metal filaments 1. In the examples shown in the figures, 5 pieces of the metal filaments 1 are arranged without being twisted to form each metal cord 2.

The metal filaments 1 in the elastomer-metal cord composite 10 according to the tire 100 of the present invention are shaped in a waveform, and at least one pair of adjacent metal filaments 1 in the metal filaments 1 have different phases from each other. This allows for avoiding the situation where the phases of the adjacent filaments coincide. Preferably, 50% or more of the pairs of adjacent metal filaments 1 have different phases from each other. Such a configuration enables the elastomer to sufficiently infiltrate into gaps between the adjacent metal filaments 1. As a result, the metal cords are allowed to deform out-of-plane and the breakability of the metal cords can be reduced, upon compression input.

Further, as described above, the elastomer is difficult to infiltrate into gaps between adjacent filaments, in the bundles of metal filaments 1, and thus causes the occurrence of non-elastomer-coated regions, which are not coated by the elastomer. Therefore, when the metal cords in which metal filaments are bundled without being twisted are used as the belt cords, the positions of the metal filaments may be shifted relative to one another in such non-elastomer-coated regions, when the tire rolls. As a result, there are cases where the in-plane rigidity of the belt is decreased, resulting in an impaired steering stability. In the elastomer-metal cord composite 10 according to the tire 100 of the present invention, however, the elastomer 3 can sufficiently infiltrate into gaps between adjacent metal filaments 1, thereby making it possible to solve the above mentioned shortcomings, to improve the in-plane rigidity of the belt 105, and to improve the steering stability.

In the elastomer-metal cord composite 10 according to the present invention, adjacent metal filaments, in at least one place in the metal cords 2, have different phases from each other, and the phase difference between the adjacent metal filaments is preferably from $\pi/4$ to $7\pi/4$. When the phase difference is adjusted within such a range, the effects of the present invention can be favorably obtained. More preferably, the phase difference is from $\pi/2$ to $3\pi/2$, and particularly preferably $\pi$.

In the elastomer-metal cord composite 10 according to the tire 100 of the present invention, it is preferred that the shaped metal filaments 1 all have the same amount of shaping and the same pitch. Further, in the elastomer-metal cord composite 10 according to the tire 100 of the present invention, the metal filaments may be subjected to two-dimensional shaping, such as waveform shaping as shown in FIG.4 or zig-zag shaping, or may be subjected to helical three-dimensional shaping. From the viewpoint of lightness, the two-dimensional shaping is preferred, and the waveform shaping is more preferred. However, it is preferred that the metal filaments 1 do not overlap with one another in the thickness direction of the metal cord 2, from the viewpoint of reducing the thickness of the belt layer and to achieve a reduction in the weight of the tire.

In order to obtain the effects of eliminating the continuous presence of the non-elastomer-coated regions between adjacent metal filaments to ensure corrosion propagation resistance, and of improving the in-plane rigidity of the belt to improve steering stability, in the elastomer-metal cord composite 10 according to the tire 100 of the present invention, the elastomer coverage of the adjacent metal filaments 1 on the side surfaces in the width direction of the metal cord 2 is preferably 10% or more, and more preferably 20% or more, per unit length. The elastomer coverage is more preferably 50% or more, and particularly preferably 80% or more. The elastomer coverage is most preferably 90% or more.

In the elastomer-metal cord composite 10 according to the tire 100 of the present invention, when the amount of shaping of the metal filaments 1 is too large, the distance w between two adjacent metal cords 2 in the elastomer-metal cord composite 10 is reduced, causing a decrease in the strength of the belt. Therefore, the amount of shaping of each metal filament 1, in the case of two-dimensional shaping, is preferably 0.03 mm or more and 0.30 mm or less. When the amount of shaping is adjusted to 0.30 mm or less, the strength of the belt layers 105a and 105b can be ensured, and the effects of the present invention can be sufficiently obtained. Particularly from the viewpoints of the distance w between two adjacent metal cords 2 and the strength of the metal filaments 1, the amount of shaping of each metal filament 1, in the case of performing two-dimensional shaping thereon, is preferably 0.03 mm or more and 0.30 mm or less, more preferably 0.03 mm or more and 0.25 mm or less, and most preferably 0.03 mm or more and 0.20 mm or less. From the same reason, the shaping pitch of each metal filament 1, in the case of two-dimensional shaping, is preferably 2 mm or more and 30 mm or less, more preferably 2 mm or more and 20 mm or less, and most preferably 3 mm or more and 15 mm or less. When the shaping pitch of each metal filament 1 is adjusted to 2 mm or more, it is possible to reduce a decrease in the strength of the filaments or an increase in the weight of the metal cords.

FIG. 7 shows a schematic cross-sectional view in the width direction of a metal cord in an elastomer-metal cord composite used for a belt layer of a tire according to another suitable embodiment of the present invention. When the metal filaments 1 are three-dimensionally shaped, as shown in FIG. 7, the amount of shaping of each metal filament 1 is preferably 0.10 mm or more and 0.50 mm or less, and more preferably from 0.20 mm or more and 0.30 mm or less. When the amount of shaping is adjusted to 0.50 mm or less, a decrease in the strength of the belt layers 105a and 105b can be reduced, to sufficiently obtain the effects of the present invention. In the case of three-dimensional shaping, the shaping pitch of each metal filament 1 is preferably 5 mm or more, and more preferably 8 mm or more and 20 mm or less.

In the metal cord 2 shown in each of FIGs. 3 to 5, the shaped metal filaments 1 are shaped in the width direction of the metal cord 2. In the elastomer-metal cord composite 10 according to the present invention, however, the shaping direction of the metal filaments 1 may be inclined with respect to the width direction the metal cord 2, as shown in FIG. 6. Even with such a structure, it is also possible to allow rubber to sufficiently infiltrate into gaps between the adjacent metal filaments 1, and to obtain the effects of the present invention. However, in the belt layers 105a and 105b according to the tire 100 of the present invention, it is preferred that the shaping direction of the adjacent metal filaments 1 be the width direction of the metal cord 2 from the viewpoint of lightness, because the thickness of the belt 105 can be reduced.

FIG. 8 shows a schematic half cross-sectional view of the belt in the tire according to one suitable embodiment of the present invention. In the tire 100 according to the present invention, each of the belt layers 105a and 105b has a thickness t1 of more than 0.30 mm and less than 1.00 mm, and suitably 0.40 mm or more and 0.90 mm or less, from the viewpoint of lightness. Further, the distance g in the tire radial direction between the metal cords 2 in the two adjacent belt layers 105a and 105b is 0.1 mm or more and 1.20 mm or less, at the center of the tire. When the distance g is adjusted within such a range, it is possible to reduce the weight of the belt, to prevent the occurrence of cracks in the rubber between adjacent belt layers, and to improve the durability. The distance g is suitably 0.1 mm or more and 0.8 mm or less.

In the tire 100 according to the present invention, an interlayer rubber 106 for ensuring the interlayer distance is preferably provided between the adjacent belt layers, at each end thereof in the tire width direction. In this case, the interlayer rubber 106 preferably has a thickness t2 of 0.2 mm or more and 1.2 mm or less. When the thickness t2 of the interlayer rubber 106 is adjusted to 0.2 mm or more, a sufficient interlayer distance between the belt layers can be ensured, and the occurrence of separation at the belt ends can be reduced. When the thickness t2 of the interlayer rubber 106 is 1.2 mm or less, on the other hand, it causes no problem in achieving a reduction the weight of the tire. In the tire 100 according to the present invention, the interlayer rubber 106 may have a sheet-like shape, as shown in FIG. 8, or may have a shape that covers one end of the belt layers. When the interlayer rubber 6 has the shape that covers one end of the belt layers, the interlayer rubber may be provided so as to cover each end of all the belt layers, or to cover each end of only a part of the belt layers, for example, only the first belt layer or only the second belt layer.

In the tire 100 according to the present invention, the coating rubber coating the metal cords 2 can be used as the interlayer rubber 106; however, a different material may be used.

In the tire 100 according to the present invention, the elastomer coating the metal cords 2 in the belt layers preferably has a 50% modulus value, as measured in accordance with JIS K6251 (2010), of 1.5 MPa or more. The elastomer preferably has a 50% modulus value of 1.8 MPa or more, and more preferably 2.0 MPa or more. When such an elastomer is used for coating the belt layers 105a and 105b, it is possible to inhibit the elongation of the metal cords 2 in the longitudinal direction, and to further improve the rigidity of the belt 105, even in cases where the metal cords 2 are elongated in the longitudinal direction and tightened by twisting, since the elastomer present in the interior of the metal cords 2 has a high rigidity. As a result, the steering stability can further be improved.

Examples of such an elastomer include, in the case of rubbers, for example, in addition to conventional rubbers: diene-based rubbers and hydrogenation products thereof, such as natural rubber (NR), isoprene rubber (IR), epoxidized natural rubber, styrene-butadiene rubber (SBR), butadiene rubber (BR, high-cis BR and low-cis BR), nitrile rubber (NBR), hydrogenated NBR and hydrogenated SBR; olefin-based rubbers such as ethylene propylene rubber (EPDM, EPM), maleic acid-modified ethylene propylene rubber (M-EPM), butyl rubber (IIR), copolymers of isobutylene and an aromatic vinyl or diene monomer, acrylic rubber (ACM) and ionomers; halogen-containing rubbers such as Br-IIR, Cl-IIR, brominated isobutylene paramethylstyrene copolymers (Br-IPMS), chloroprene rubber (CR), hydrin rubber (CHR), chlorosulfonated polyethylene rubber (CSM), chlorinated polyethylene rubber (CM) and maleic acid-modified chlorinated polyethylene rubber (M-CM); silicone rubbers such as methyl vinyl silicone rubber, dimethyl silicone rubber and methyl phenyl vinyl silicone rubber; sulfur rubbers such as polysulfide rubber; fluororubbers such as vinylidene fluoride-based rubbers, fluorine-containing vinyl ether-based rubbers, tetrafluoroethylene-propylene-based rubbers, fluorine-containing silicon-based rubbers and fluorine-containing phosphazene-based rubbers; thermoplastic elastomers such as styrene-based elastomers, olefin-based elastomers, ester-based elastomers, urethane-based elastomers and polyamide-based elastomers. The 50% modulus value of the coating rubber is a value obtained by vulcanizing a rubber composition of each sample at 145°C for 40 minutes to obtain a vulcanized rubber, and then performing the measurement in accordance with JIS K 6251 (2010).

In the belt layers 105a and 105b of the tire 100 according to the present invention, the metal filaments 1 usually refer to linear-shaped pieces made of steel, namely, made of a metal containing iron as a main component (the mass of iron with respect to the total mass of the metal filament is more than 50% by mass), and may consist of iron, or may contain a metal(s) other than iron, such as zinc, copper, aluminum, tin and/or the like.

Further, in the belt layers 105a and 105b of the tire 100 according to the present invention, the surface condition of the metal filaments 1 is not particularly limited, and the metal filaments 1 may be, for example, in any of the following forms. Specifically, each metal filament 1 may be, for example, in a form in which N atoms on the surface thereof is 2 atomic% or more and 60 atomic% or less, and the Cu/Zn ratio on the surface thereof is 1 or more and 4 or less. Further, each metal filament 1 may be, for example, in a form in which the amount of phosphorus contained as oxides in the outermost layer of the metal filament, which is the region of the metal filament from the filament surface to 5 nm inward in the filament radial direction, is 7.0 atomic% or less, as the ratio with respect to the total amount excluding the amount of C.

In the belt layers 105a and 105b of the tire 100 according to the present invention, the surface metal filaments 1 may be plated. The type of plating is not particularly limited, and examples thereof include: zinc (Zn) plating, copper (Cu) plating, tin (Sn) plating, brass (copper-zinc (Cu-Zn)) plating and bronze (copper-tin (Cu-Sn)) plating; and ternary plating, such as copper-zinc-tin (Cu-Zn-Sn) plating and copper-zin -cobalt (Cu-Zn-Co) plating. Among these, brass plating or copper-zinc-cobalt plating is preferred. This is because metal filaments having brass plating have an excellent adhesion to rubber. The brass plating usually contains copper and zinc at a ratio (copper: zinc) in a mass basis of from 60 to 70:30 to 40, and the copper-zinc-cobalt plating usually contains from 60 to 75% by weight of copper and 0.5 to 10% by weight of cobalt. In general, a plating layer has a thickness of 100 nm or more and 300 nm or less.

Further, in the belt layers 105a and 105b of the tire 100 according to the present invention, the wire diameter, the tensile strength, and the cross-sectional shape of each metal filament 1 are not particularly limited. For example, the wire diameter of each metal filament 1 may be 0.15 mm or more and 0.40 mm or less. Further, one having a tensile strength of 2,500 MPa (250 kg/mm$^2$) or more can be used as the metal filament 1. The cross-sectional shape in the width direction of the metal filament 1 is also not particularly limited, may be an elliptical shape, a rectangular shape, a triangular shape, a polygonal shape or the like. However, a circular shape is preferred. In cases where it is necessary to bind a bundle of the metal filaments 1 constituting each metal cord 2, in the elastomer-metal cord composite 10 according to the present invention, a wrapping filament (a spiral filament) may be used.

The elastomer-metal cord composite according to the tire of the present invention can be produced by a known method. For example, the elastomer-metal cord composite can be produced by: arranging steel cords as the metal cords, each composed of a bundle of a plurality of metal filaments arranged without being twisted, in parallel and at predetermined intervals; and coating the thus arranged cords with rubber. Thereafter, the resultant can be subjected to vulcanization under general conditions, to produce a sample for evaluation. The shaping of the metal filaments can be performed using a common shaping apparatus in accordance with a conventional method.

Specifically, the tire according to the present invention may be, for example, a tire which includes a belt composed of two belt layers of the type shown in FIG. 2, and in which a rubber-steel cord composite produced as follows is used as each belt layer. The rubber-steel cord composite is produced by: subjecting 7 pieces of steel filaments having a wire diameter of 0.25 mm to two-dimensional shaping at an amount of shaping of 0.1 mm and a shaping pitch of 4 mm; arranging the steel filaments in parallel such that the phase difference between the filaments is $\pi/2$, to form each steel cord; arranging a plurality of the thus formed steel cords so as to achieve an inter-cord distance w of 0.6 mm; and coating the steel cords with rubber to a thickness of 0.65 mm. In this rubber-steel cord composite, the cord count per unit width is 15.6 pieces/50 mm, and the interlayer distance g is 0.4 mm. In this tire, an interlayer rubber having a thickness t2 of 0.5 mm can be provided between the belt layers, at each end thereof in the tire width direction.

The tire 100 according to the present invention is required to have the above-described structure of the belt, and specific tire structures other than that are not particularly limited. For example, a belt reinforcing layer may be disposed on the outer side in the tire radial direction of the belt 105, or another reinforcing member may be used. As the air to be filled into the tire 100, it is possible to use normal air or air whose oxygen partial pressure is adjusted, or an inert gas such as nitrogen, argon or helium gas. The tire according to the present invention can be suitably used as a tire for a passenger car or a tire for a truck or a bus.

The use of the elastomer-metal cord composite according to the present invention for the belt enables to obtain both steering stability and separation resistance in a balanced manner.

DESCRIPTION OF SYMBOLS

| | |
|---|---|
| 1 | metal filament |
| 2 | metal cord |
| 3 | elastomer |
| 10 | elastomer-metal cord composite |
| 100 | tire |
| 101 | tread portion |
| 102 | side wall portion |
| 103 | bead portion |
| 104 | carcass |
| 105 | belt |
| 105a, 105b | belt layer |
| 106 | interlayer rubber |

**Claims**

1. A tire comprising:

   a carcass as a skeleton extending toroidally between a pair of bead portions; and
   a belt disposed on the outer side in the tire radial direction of a crown portion of the carcass and including at least two belt layers;
   **characterized in that**:

   the belt layers are each composed of an elastomer-metal cord composite obtained by coating metal cords with an elastomer, each metal cord being composed of a bundle of a plurality of metal filaments arranged in a row without being twisted;
   the metal filaments are shaped, and at least one pair of adjacent metal filaments in the metal filaments have different phases from each other;
   each of the belt layers has a thickness of more than 0.30 mm and less than 1.00 mm; and
   the distance in the tire radial direction between the metal cords in two adjacent layers of the belt layers is 0.10 mm or more and 1.20 mm or less at the center of the tire.

2. The tire according to claim 1, wherein the metal filaments have the same amount of shaping and the same pitch.

3. The tire according to claim 1 or 2, wherein the phase difference between the adjacent metal filaments is from $\pi/4$ to $7\pi/4$.

4. The tire according to any one of claims 1 to 3, wherein the elastomer coverage of the adjacent metal filaments on the side surfaces in the width direction of the metal cord is 10% or more per unit length.

5. The tire according to any one of claims 1 to 4, wherein each of the metal filaments has an amount of shaping from 0.03 to 0.30 mm and a shaping pitch of from 2 to 30 mm.

6. The tire according to any one of claims 1 to 5, wherein the shaping direction of the shaped metal filaments is the width direction of the metal cord.

7. The tire according to any one of claims 1 to 6, wherein an interlayer rubber is provided between the belt layers that are adjacent to each other, at each end thereof in the tire width direction.

8. The tire according to claim 7, wherein the interlayer rubber has a thickness of 0.2 mm or more and 1.2 mm or less.

9. The tire according to any one of claims 1 to 8, wherein the elastomer has a 50% modulus value, as measured in accordance with JIS K6251 (2010), of 1.5 MPa or more.

10. The tire according to any one of claims 1 to 9, wherein each of the metal filaments has a tensile strength of 2,500 MPa or more.

FIG. 1

FIG. 2

FIG. 3

FIG. 4

FIG. 5

FIG. 6

FIG. 7

FIG. 8

<div align="center">

**INTERNATIONAL SEARCH REPORT**

</div>

| | International application No. |
|---|---|
| | PCT/JP2019/040764 |

**A. CLASSIFICATION OF SUBJECT MATTER**
B60 C9/00(2006.01)I; B06C 9/18(2006.01)I; B60C 9/20(2006.01)i
FI: B60C9/18 A; B60C9/00 J; B60C9/20 E; B60C9/18 M; B60C9/20 G

According to International Patent Classification (IPC) or to both national classification and IPC

**B. FIELDS SEARCHED**

Minimum documentation searched (classification system followed by classification symbols)
B60C9/00; B60C9/18; B60C9/20

Documentation searched other than minimum documentation to the extent that such documents are included in the fields searched
Published examined utility model applications of Japan          1922–1996
Published unexamined utility model applications of Japan          1971–2020
Registered utility model specifications of Japan          1996–2020
Published registered utility model applications of Japan          1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-160121 A (BRIDGESTONE CORPORATION) 22.06.2006 (2006-06-22) entire text | 1-10 |
| A | JP 7-145578 A (TOKYO ROPE MFG. CO., LTD.) 06.06.1995 (1995-06-06) entire text | 1-10 |
| A | JP 7-157986 A (TOKYO ROPE MFG. CO., LTD.) 20.06.1995 (1995-06-20) entire text | 1-10 |
| A | JP 9-13288 A (BRIDGESTONE CORPORATION) 14.01.1997 (1997-01-14) entire text | 1-10 |
| A | JP 11-21776 A (TOKYO ROPE MFG. CO., LTD.) 26.01.1999 (1999-01-26) entire text | 1-10 |
| A | JP 2002-339276 A (SUMITOMO RUBBER INDUSTRIES, LTD.) 27.11.2002 (2002-11-27) entire text | 1-10 |
| A | JP 6-235179 A (KOKOKU KOUSENSAKU KK) 23.08.1994 (1994-08-23) entire text | 1-10 |

☒ Further documents are listed in the continuation of Box C.          ☒ See patent family annex.

| | | |
|---|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| 06 January 2020 (06.01.2020) | 14 January 2020 (14.01.2020) |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
|---|---|

Form PCT/ISA/210 (second sheet) (January 2015)

<div align="center">

**12**

</div>

EP 3 868 571 A1

**INTERNATIONAL SEARCH REPORT**

International application No.

PCT/JP2019/040764

C (Continuation).   DOCUMENTS CONSIDERED TO BE RELEVANT

| Category* | Citation of document, with indication, where appropriate, of the relevant passages | Relevant to claim No. |
|---|---|---|
| A | EP 1900549 A1 (NV BEKAERT SA) 19.03.2008 (2008-03-19) entire text | 1-10 |
| A | US 2010/0154956 A1 (KRIER, Roland Willibrord) 24.06.2010 (2010-06-24) entire text | 1-10 |
| P, X | JP 2018-176960 A (BRIDGESTONE CORPORATION) 15.11.2018 (2018-11-15) entire text | 1-10 |
| P, X | WO 2018/190309 A1 (BRIDGESTONE CORPORATION) 18.10.2018 (2018-10-18) entire text | 1-10 |

Form PCT/ISA/210 (continuation of second sheet) (January 2015)

**INTERNATIONAL SEARCH REPORT**
Information on patent family members

International application No.

PCT/JP2019/040764

| Patent Documents referred in the Report | Publication Date | Patent Family | Publication Date |
|---|---|---|---|
| JP 2006-160121 A | 22 Jun. 2006 | (Family: none) | |
| JP 7-145578 A | 06 Jun. 1995 | (Family: none) | |
| JP 7-157986 A | 20 Jun. 1995 | (Family: none) | |
| JP 9-13288 A | 14 Jan. 1997 | (Family: none) | |
| JP 11-21776 A | 26 Jan. 1999 | (Family: none) | |
| JP 2002-339276 A | 27 Nov. 2002 | US 2002/0185205 A1 entire text EP 1256652 A2 | |
| JP 6-235179 A | 23 Aug. 1994 | KR 10-1994-0019921 A | |
| EP 1900549 A1 | 19 Mar. 2008 | (Family: none) | |
| US 2010/0154956 A1 | 24 Jun. 2010 | EP 2199103 A2 entire text | |
| JP 2018-176960 A | 15 Nov. 2018 | (Family: none) | |
| WO 2018/190309 A1 | 18 Oct. 2018 | (Family: none) | |

Form PCT/ISA/210 (patent family annex) (January 2015)

**EP 3 868 571 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001334810 A